# EUROPÄISCHE PATENTSCHRIFT

(11) **EP 3 577 296 B1**
(45) Veröffentlichungstag und Bekanntmachung des Hinweises auf die Patenterteilung: **09.12.2020**
(21) Anmeldenummer: 18703932.6
(22) Anmeldetag: 30.01.2018
(51) Int. Cl.: E05F 5/10, F16F 9/52

(54) **BREMSVORRICHTUNG UND MÖBEL ODER HAUSHALTSGERÄT MIT EINER BREMSVORRICHTUNG**
BRAKING DEVICE AND PIECE OF FURNITURE OR DOMESTIC APPLIANCE HAVING A BRAKING DEVICE
DISPOSITIF DE FREINAGE ET MEUBLE OU APPAREIL MÉNAGER ÉQUIPÉ D'UN DISPOSITIF DE FREINAGE

(30) Priorität: 02.02.2017 DE 102017102078
(43) Veröffentlichungstag der Anmeldung: 11.12.2019
(73) Patentinhaber: Druck- und Spritzgußwerk Hettich GmbH & Co. KG, 35066 Frankenberg (DE)
(72) Erfinder: SCHAEL, Oliver, 32278 Kirchlengern (DE); GÖTZ, Gerhard, 32257 Bünde (DE); JAEKEL, Steffen, 32120 Hiddenhausen (DE)
(74) Vertreter: Kleine, Hubertus
(86) Internationale Anmeldenummer: PCT/EP2018/052244
(87) Internationale Veröffentlichungsnummer: WO 2018/141733

(56) Entgegenhaltungen:
- EP-A1- 1 703 060
- AT-B- 223 497
- DE-A1- 2 947 370
- GB-A- 191 215 070
- JP-A- 2007 309 501

## Beschreibung

Die Erfindung betrifft eine Bremsvorrichtung eines Möbels oder Haushaltsgeräts zum Abbremsen eines bewegbaren Teils des Möbels oder Haushaltsgeräts, aufweisend ein mit einer viskosen Flüssigkeit gefülltes Gehäuse und einem in diesem bewegbaren Element, wobei die viskose Flüssigkeit eine Bewegung des bewegbaren Element in mindestens einem Strömungsabschnitt abbremst. Die Erfindung betrifft weiterhin ein Möbel oder Haushaltsgerät mit mindestens einer Bremsvorrichtung.

Zur Erhöhung des Bedienkomforts sind Möbel und Haushaltsgeräte, insbesondere aber nicht ausschließlich im Küchenbereich, häufig mit Bremsvorrichtungen ausgestattet, die ein sanftes Anfahren einer Endlage eines bewegbaren Teils, z.B. einer Tür oder Klappe, sicherstellen. Häufig sind die Bremsvorrichtungen so angeordnet, dass sie eine Schließbewegung eines linear durch eine Auszugsführung verschieblich gelagerten Teils oder auch die Schließbewegung einer schwenkbaren Tür oder Klappe des Möbels oder des Haushaltsgeräts abbremsen, sodass ein sanftes und geräuschloses Schließen erfolgt. Weiter sind Anordnungen bekannt, bei dem auch ein abgebremstes Anfahren einer geöffneten bzw. vollständig ausgefahrenen Stellung des bewegbaren Teils erreicht wird.

Bei einer weit verbreiteten Art von Bremsvorrichtungen wird eine viskose Flüssigkeit, insbesondere Öl, durch die Bewegung eines Kolbens in einem Zylinder durch einen Strömungskanal mit gegenüber dem Zylinder verringertem Querschnitt gedrückt, wodurch der bremsende Effekt erzielt wird. Derartige Linear-Bremsvorrichtungen sind einfach im Aufbau und zuverlässig in ihrer Wirkungsweise, wenn die verwendete Flüssigkeit eine vorgegebene Viskosität inne hat. Alle bekannten und geeigneten viskosen Flüssigkeiten weisen jedoch eine starke Temperaturabhängigkeit ihrer Viskosität auf. Damit ist auch die Bremseigenschaft stark temperaturabhängig.

Viskose Flüssigkeiten werden auch zur Dämpfung von Schwingungen des Fahrwerks im Fahrzeugbereich eingesetzt. Hierbei sind die Schwingungsdämpfer großen Temperaturschwankungen ausgesetzt. Um dennoch ein akzeptables Dämpfungsverhalten in einem weiten Temperaturbereich zu erzielen, ist beispielsweise aus der Druckschrift DE 88 15 444 U1 ein Schwingungsdämpfer bekannt, bei dem eine Dämpfungswirkung dadurch erzeugt wird, dass die viskose Flüssigkeit durch eine Strömungsverbindung strömt, deren wirksamer Querschnitt durch ein Ventil verstellbar ist. Durch Variation des wirksamen Querschnitts kann die Dämpfungswirkung variiert werden. Zur Ansteuerung des Ventils ist ein elektrisch ansteuerbares, insbesondere ein Piezo-elektrisches Stellorgan vorgesehen, um eine hohe Ansprechgeschwindigkeit beim Verstellen der Dämpfungswirkung zu erzielen.

Die Druckschrift AT 223497 zeigt beispielsweise einen Schwingungsdämpfer mit einer temperaturabhängig steuernden Ventileinrichtung. Hierbei sind Ventilkläppchen innerhalb des Kolbens des Schwingungsdämpfers angeordnet. Die Anordnung der Ventilkläppchen innerhalb des Kolbens bedingt einen mechanisch komplexen Aufbau.

Die Druckschrift GB 15070 A beschreibt einen gestuften Kolben mit einer radial von innen nach außen laufenden Durchströmungsöffnung, die temperaturabhängig mehr oder weniger geschlossen wird. Zu dem Zweck ist ein aufwändig geformtes ringförmiges und sich abhängig von der Temperatur veränderndes Element notwendig.

Aus der Druckschrift DE 29 47 370 A1 ist es bekannt, zum Erzielen einer temperaturabhängigen Ventilsteuerung bei einem Dämpfungselement ein einfach herstellbares Ventilplättchen zu verwenden. Hierzu wird eine Anordnung aus Tellerfedern und zwei Ventilplättchen eingesetzt, die auf beiden Seiten des Kolbens angeordnet sind und den Kolben temperaturabhängig in Axialrichtung der Kolbenstange verschieben, wobei Strömungskanäle verschlossen werden.

Temperaturschwankungen sind im Möbelbereich kleiner als beispielsweise im Automobilbereich, dennoch führen Unterschiede in der Viskosität der in Bremsvorrichtungen verwendeten Flüssigkeiten abhängig von der Umgebungstemperatur zu einer ungewünschten Variation der Bremseigenschaften. Im Resultat arbeiten Bremsvorrichtungen daher häufig nur in einem eingeschränkten Temperaturbereich zufriedenstellend.

Es ist eine Aufgabe der vorliegenden Erfindung, eine über einen möglichst weiten Temperaturbereich zufriedenstellend und mit gleichbleibenden Bremseigenschaften arbeitende Bremsvorrichtung eines Möbels oder Haushaltsgeräts bzw. ein Möbel oder Haushaltsgerät mit einer derartigen Bremsvorrichtung zu schaffen.

Diese Aufgabe wird durch eine Bremsvorrichtung mit den Merkmalen des unabhängigen Anspruchs gelöst.

Eine erfindungsgemäße Bremsvorrichtung der eingangs genannten Art zeichnet sich dadurch aus, dass sich eine Geometrie des mindestens einen Strömungsabschnitts mit der Umgebungstemperatur ändert. Durch die temperaturabhängige Änderung der Geometrie des Strömungsabschnitts kann die ebenfalls temperaturabhängige Änderung der Viskosität der viskosen Flüssigkeit vorteilhaft kompensiert oder möglichst gut kompensiert werden, so dass über einen weiten Temperaturbereich nahezu gleichbleibende Abbremseigenschaften erzielt werden.

Bei der Bremsvorrichtung ist das Gehäuse ein Zylinder und das darin bewegbare Element ein Kolben. Der mindestens eine Strömungsabschnitt ist als mindestens ein Strömungskanal ausgebildet, durch den die viskose Flüssigkeit im Zylinder von einem ersten zu einem zweiten Zylinderabschnitt, die durch den Kolben getrennt sind, strömen kann. Die Bremsvorrichtung bremst somit eine lineare Verschiebebewegung des Kolbens, wobei der Kolben z.B. über eine Kolbenstange mit einem Korpus oder dem bewegbaren Teil des Möbels bzw. des Haushaltsgeräts gekoppelt ist.

Der Strömungskanal umfasst dabei einen in radialer Erstreckung oder ringförmig ausgebildeten um den Kolben angeordneten Spalt. Zusätzlich kann der Strömungskanal mindestens abschnittsweise in Längsrichtung durch den Kolben führen. Es können mehrere Strömungskanäle gleichen oder unterschiedlichen Typs vorgesehen sein.

Erfindungsgemäß ist auf einer Stirnfläche des Kolbens ein Ventilplättchen angeordnet, das einen Strömungswiderstand einer Strömung durch zumindest einen der temperaturabhängig beeinflusst. Das Ventilplättchen beeinflusst dabei den Strömungswiderstand, indem zumindest ein Abschnitt des Ventilplättchens mit steigender Temperatur eine Ein- oder Ausgangsöffnung des mindestens Strömungskanals zunehmend abdeckt und/oder verschließt. Eine mit steigender Temperatur abnehmende Viskosität der Flüssigkeit wird kompensiert, indem der mindestens ein Strömungskanal mit steigender Temperatur immer weniger und ggf. schließlich gar nicht mehr zur Strömung der Flüssigkeit von einer auf die andere Seite des Kolbens beiträgt.

Das Ventilplättchen besteht aus einer Materialpaarung mit Bimetal-Effekt und ändert seine Form temperaturabhängig. Es wird so ein Ventil gebildet, das selbständig temperaturabhängig die Strömungseigenschaften beeiflusst, ohne dass eine aufwändige externe Vorrichtung zur Ventilsteuerung benötigt würde. Statt eines herkömmlichen Bimetalls kann dabei alternativ auch eine geschichtete stoffschlüssige Materialkombination aus einer Kunststoff/Kunststoff- oder Kunststoff/Metall-Paarung verwendet werden, die auf grund ihrer unterschiedlichen Wärmeausdehnungskoeffizienten im gewünschten Temperaturbereich den sogenannten Bimetall-Effekt aufweist und sich vergleichbar verhält.

Ein erfindungsgemäßes Möbel oder Haushaltsgerät zeichnet sich durch mindestens eine derartige Bremsvorrichtung zum Abbremsen einer Bewegung eines bewegbaren Teils des Möbels oder Haushaltsgeräts aus. Dabei ist im Rahmen dieser Anmeldung der Begriff Haushaltsgerät weit zu fassen. Neben z.B. Küchengeräten wie Kühlschränken, Gefrierschränken, Backöfen oder Geschirrspülgeräten umfasst der Begriff auch sonstige im Haus bzw. Haushalt eingesetzte Elektrogeräte, wie z.B. Drucker. Bei letzteren kann beispielsweise eine bewegbare Klappe z.B. eines Ausgabeschachts durch die Bremsvorrichtung abgebremst werden.

Die Erfindung wird nachfolgend anhand von Ausführungsbeispielen mithilfe von Figuren näher erläutert. Die Figuren zeigen:
- Fig. 1a - 1c: ein erstes nicht erfindungsgemäßes Ausführungsbeispiel einer Bremsvorrichtung in jeweils einer schematischen Darstellung bei unterschiedlichen Temperaturen;
- Fig. 2a - 2c: ein weiteres nicht erfindungsgemäßes Ausführungsbeispiel einer Bremsvorrichtung in einer Darstellung analog zu den Fig. 1a - 1c;
- Fig. 3a - 3c: ein erfindungsgemäßes Ausführungsbeispiel einer Bremsvorrichtung in einer Darstellung analog zu den Fig. 1a - 1c; und
- Fig. 4: ein weiteres, nicht erfindungsgemäßes Ausführungsbeispiel einer Bremsvorrichtung in einer detailliertern isometrischen Darstellung.

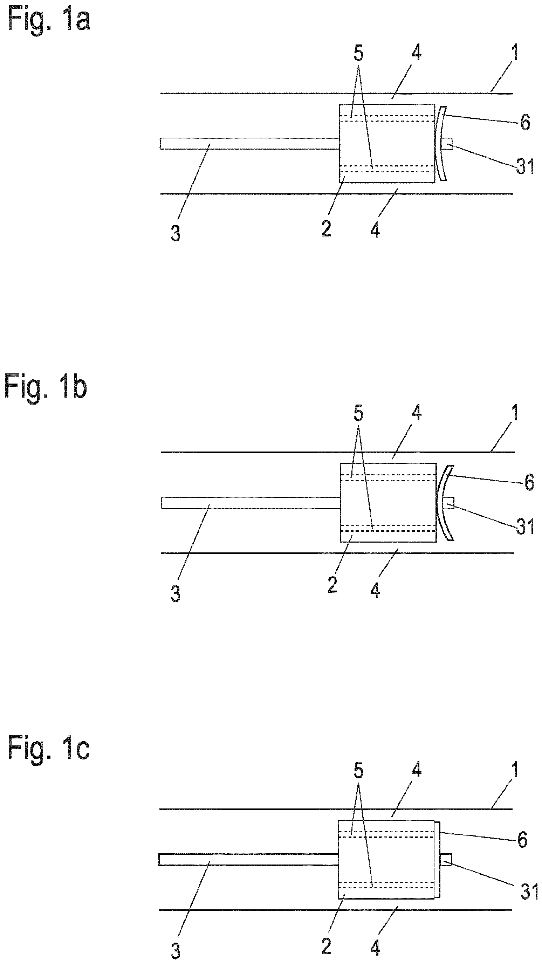

In den Fig. 1a - 1c ist ein erstes nicht erfindungsgemäßes Ausführungsbeispiel einer Bremsvorrichtung in jeweils einer schematischen Seitenansicht wiedergegeben.

Die Bremsvorrichtung umfasst einen Zylinder 1, von dem in den Figuren nur ein mittlerer Abschnitt wiedergegeben ist. Der Zylinder 1 ist zudem geöffnet dargestellt, so dass ein sich im Inneren des Zylinders 1 bewegbarer Kolben 2 sichtbar ist. Der Zylinder 1 ist mit einer viskosen Flüssigkeit, beispielsweise einem Öl gefüllt, durch das sich der Kolben 2 bewegt. Der Kolben 2 ist mit einer nach außen führenden Kolbenstange 3 verbunden. Der Zylinder 1 ist zu beiden Seiten geschlossen, wobei eine abdichtende Durchführung für die Kolbenstange 3 vorgesehen ist.

Über die Kolbenstange 3 ist der Kolben 2 mit einer Komponente eines Möbels oder Haushaltsgeräts gekoppelt. Eine weitere Komponente des Möbels oder Haushaltsgeräts ist mit dem Zylinder 1 verbunden. Die Anbindung der Bremsvorrichtung an das Möbel oder das Haushaltsgerät kann dabei unmittelbar erfolgen oder mittelbar über einen Bewegungsbeschlag. Bevorzugt kann die Bremsvorrichtung im letztgenannten Fall auch in den Bewegungsbeschlag integriert sein.

Um eine gebremste Bewegung des Kolbens 2 im Zylinder 1 zu ermöglichen, ist mindestens ein Strömungskanal (Strömungsweg) ausgebildet, durch den die viskose Flüssigkeit bei Bewegung des Kolbens 2 im Zylinder 1 von einem Zylinderabschnitt, der auf der einen Seiten des Kolbens 2 liegt, in den auf der gegenüberliegenden Seite liegenden Zylinderabschnitt gelangt. Die Abbremsung, die der Kolben 2 dabei erfährt, hängt von den Strömungseigenschaften der Flüssigkeit in diesem Strömungskanal ab. Neben der Viskosität der Flüssigkeit ist dabei der Strömungswiderstand des Strömungskanals maßgeblich, der durch die Geometrie des mindestens ein Strömungskanals, u. a. seine Länge und seinen Querschnitt, bestimmt wird.

Beim darstellten Beispiel ist ein Hauptströmungskanal 4 vorhanden, der durch einen umlaufenden Ringspalt zwischen einer äußeren Wandung des Kolbens 2 und einer inneren Wandung des Zylinders 1 gebildet ist. Dieser Hauptströmungskanal 4 ist mit Blick auf seine Geometrie vorgegeben.

Weiterhin sind Nebenströmungskanäle 5 vorgesehen, die durch Öffnungen gebildet sind, die im Wesentlichen oder im Anfangsbereich in Längsrichtung durch den Kolben 2 führen. Zentral auf einer Stirnfläche des Kolbens 2 ist ein Ventilplättchen 6 angeordnet. Das Ventilplättchen 6 weist einen dem Kolben entsprechenden Querschnitt, in der Regel einen kreisrunden Querschnitt, auf. Es ist mittig am Kolben 2 befestigt, vorliegend mit einem Befestigungsmittel 31, das hier durch das Ende der durch den Kolben 2 führenden Kolbenstange 3 gebildet ist.

Die Nebenströmungskanäle 5 bieten eine weitere Möglichkeit für die Flüssigkeit, bei Bewegung des Kolbens 2 von einer Seite des Kolbens 2 zur anderen Seite des Kolbens 2 im Zylinder 1 zu strömen. Dabei werden die Strömungseigenschaften der Nebenströmungskanäle 5 temperaturabhängig durch das Ventilplättchen 6 variiert. Dieses wird dadurch erzielt, dass das Ventilplättchen 6 aus einem Bimetallmaterial gebildet ist, das seine Form temperaturabhängig ändert.

Die Zuordnung als Haupt- und Nebenströmungskanal ist dabei lediglich der Dimensionierung der Querschnitte zueinander geschuldet und nicht ihrer Lage, so kann in der weiteren Betrachtung je nach Querschnittsverhältnis der Hauptströmungskanal oder der Nebenströmungskanal einer erfindungsgemäßen Temperaturregelung unterliegen.

Fig. 1a zeigt die Form des Ventilplättchens 6 bei einer mittleren Temperatur, beispielsweise bei einer typischen Raumtemperatur im Bereich von 20°C, die nachfolgend auch als normale Raumtemperatur oder Normaltemperatur bezeichnet wird. Das Ventilplättchen 6 weist in diesem Zustand eine leichte Biegung auf, die eine Durchströmung der Nebenströmungskanäle 5 durch die viskose Flüssigkeit ermöglicht. Der Strömungswiderstand, den die Flüssigkeit bei der Strömung durch die Nebenströmungskanäle 5 erfährt, wird dabei auch durch den Spalt, der zwischen dem Ventilplättchen 6 und den Ein- oder Auslässen (je nach Bewegungsrichtung) der Nebenströmungskanäle 5 auf der Stirnseite des Kolbens 2 gebildet ist, beeinflusst.

Fig. 1b zeigt die Form des Ventilplättchens 6 bei einer Temperatur, die unterhalb der normalen Raumtemperatur liegt. Bei dieser verringerten Temperatur hat sich das Ventilplättchen 6 weiter durchgebogen, so dass sich der zwischen ihm und den Ein- oder Auslässen der Nebenströmungskanäle 5 liegende Spalt vergrößert hat. Entsprechend erfährt Flüssigkeit, die durch die Nebenströmungskanäle 5 fließt, einen geringeren Strömungswiderstand. Dabei ist die Verringerung des Strömungswiderstands so bemessen, dass nach Möglichkeit die temperaturabhängige Zunahme der Viskosität der Flüssigkeit bei geringerer Temperatur kompensiert wird. Als Folge erfährt der Kolben 2 insgesamt bei der verringerten Temperatur eine vergleichbare Abbremsung wie bei der in Fig. 1 dargestellten Situation bei Normaltemperatur.

Fig. 1c zeigt den Zustand des Ventilplättchens 6 bei einer gegenüber der normalen Raumtemperatur erhöhten Temperatur. Bei dieser erhöhten Temperatur hat sich das Ventilplättchen 6 weiter zum Kolben 5 hin aufgebogen und nimmt einen im Wesentlichen flachen Zustand ein. In diesem Zustand werden die Nebenströmungskanäle 5 durch das Ventilplättchen 6 vollständig oder nahezu vollständig abgeschlossen. Die Flüssigkeit strömt bei Bewegung des Kolbens 2 nur durch den Hauptströmungskanal 4. Insgesamt erhöht sich dadurch der Strömungswiderstand, den die Strömungskanäle der Flüssigkeit entgegen setzen. Die Erhöhung des Strömungswiderstands ist dabei so bemessen, dass vorteilhafterweise die bei der erhöhten Temperatur geringere Viskosität der Flüssigkeit gerade ausgeglichen wird. Auch bei erhöhter Temperatur erfährt der Kolben 2 bei Bewegung eine vergleichbare Abbremsung wie bei der normalen Raumtemperatur.

Durch die Formveränderung des Ventilplättchens 6 kann so ein gleiches oder vergleichbares Abbremsverhalten über einen weiten Temperaturbereich, beispielsweise einen Temperaturbereich von -30°C bis +70°C, erzielt werden.

Die in den Fig. 1a - 1c dargestellte Bremsvorrichtung bremst die Bewegung des Kolbens 2 in beide Bewegungsrichtungen gleichermaßen. Für bestimmte Anwendungen kann gewünscht sein, die Bewegung des Kolbens 2 in eine Richtung stärker zu bremsen, als in die andere Richtung. Zu diesem Zweck können weitere Strömungskanäle ausbildet sein, die durch eine Ventilklappe nach Art eines Rückschlagventils geöffnet oder geschlossen werden. In einer alternativen Ausgestaltung kann vorgesehen sein, die Funktion der Rückschlagklappe mit der Funktion des temperaturabhängig variierenden Ventilplättchens 6 zu kombinieren. In einer anderen alternativen Ausgestaltung ist das Ventilplättchen axial verschiebbar am Kolbenboden befestigt und liegt in einer Bewegungsrichtung (Lastfall) am Kolben an und regelt somit als Einlassventil den Durchfluss der Nebenströmungskanäle und in der Gegenrichtung (Freilaufsituation) kann es sich vom Kolben wegbewegen und gibt den Auslass der Nebenströmungskanäle frei.

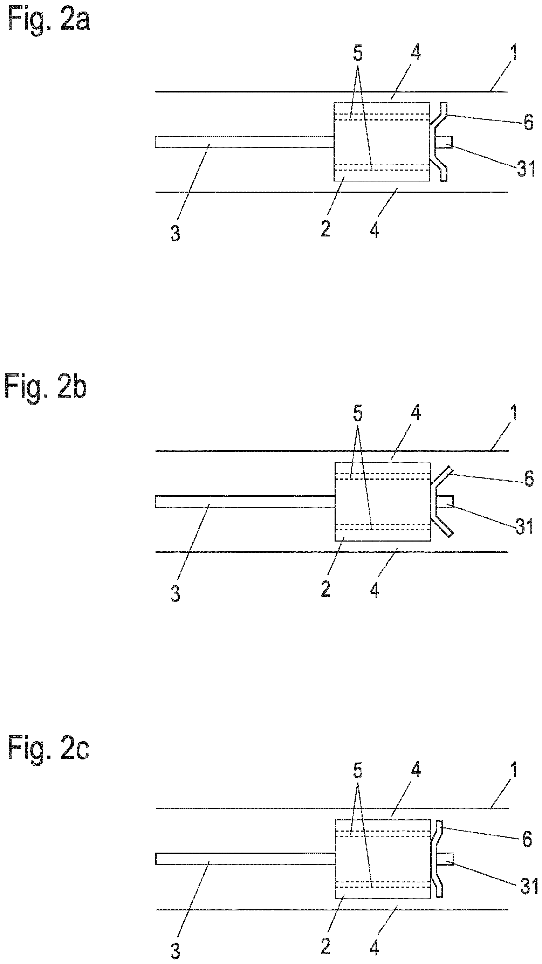

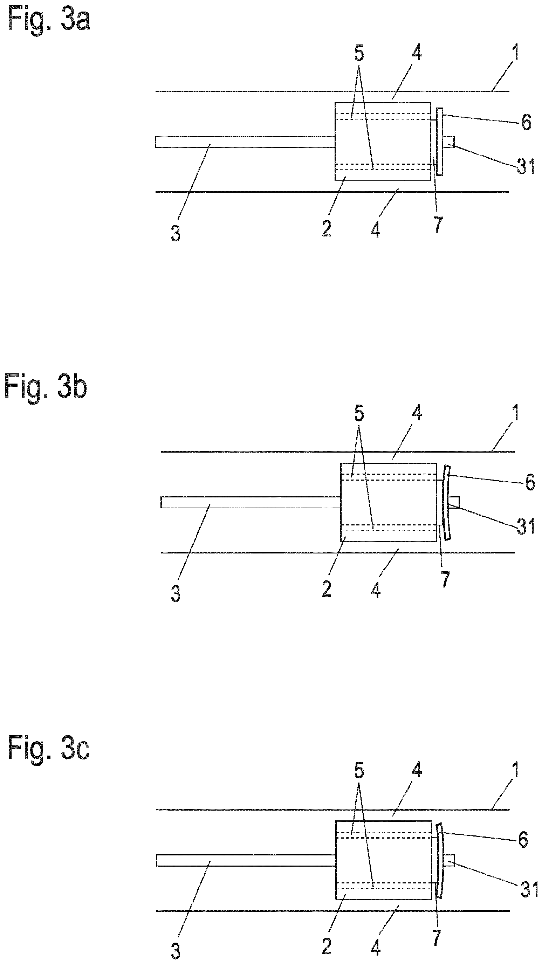

In den Fig. 2a - 2c und 3a - 3c wird jeweils ein weiteres Ausführungsbeispiel einer anmeldungsgemäßen Bremsvorrichtung dargestellt. Bei allen Figuren kennzeichnen gleiche Bezugszeichen gleiche oder gleichwirkende Elemente wie bei den Fig. 1a - 1c.

Es ist jeweils in der Figur mit dem Zusatz "a" der Zustand der Bremsvorrichtung bei der normalen Raumtemperatur dargestellt, in der Figur mit dem Zusatz "b" der Zustand bei einer demgegenüber verringerten Temperatur und in der Figur mit dem Zusatz "c" der Zustand bei einer gegenüber der normalen Raumtemperatur erhöhten Temperatur.

Im folgenden werden insbesondere die Unterschiede dieser Ausführungsbeispiele verglichen mit dem Ausführungsbeispiel der Fig. 1a - 1c erläutert. Bezüglich des Grundaufbaus wird auf die Beschreibung zum ersten Ausführungsbeispiel verwiesen.

Beim nicht erfindungsgemäßen Beispiel der Fig. 2a - 2c wird ein Ventilplättchen 6 mit einer eingeprägten Stufe eingesetzt. Bei erhöhter Temperatur (Fig. 2c) sind ein innerer und ein äußerer jeweils flacher Abschnitt des Ventilplättchens 6 erkennbar, die durch einen schräg verlaufenden und die Stufe bildenden ringförmigen Bereich voneinander getrennt sind. Die Stufenhöhe ist bei dieser Temperatur gering, wodurch ein kleiner Spalt zwischen den Ein-/Ausgängen der Nebenströmungskanälen 5 und dem Ventilplättchen 6 gebildet ist. Entsprechend liegt ein hoher Strömungswiderstand für Strömung der viskosen Flüssigkeit durch die Nebenströmungskanäle 5 vor. Im Unterschied zum Ausführungsbeispiel der Fig. 1c werden die Nebenströmungskanäle 5 allerdings auch bei erhöhter Temperatur nicht vollständig verschlossen.

Bei Normaltemperatur (Fig. 2a) ist die Stufe zwischen den Bereichen des Ventilplättchens 6 größer, so dass ein kleinerer Strömungswiderstand bei Strömung durch die Nebenströmungskanäle 5 gegeben ist. Bei verringerter Temperatur (Fig. 2b) ist die Stufengröße weiter erhöht, derart, dass der äußere flache ringförmige Bereich des Ventilplättchens 6 nahezu vollständig in der Stufe aufgegangen ist. Der Strömungswiderstand bei Strömung durch die Nebenströmungskanäle 5 ist hier dementsprechend verringert.

Bei dem in den Fig. 3a - 3c dargestellten erfindungsgemäßen Ausführungsbeispiel wird wiederum ein Ventilplättchen 6 eingesetzt, das in einem Temperaturbereich flach ist. Vorliegend nimmt das Ventilplättchen 6 seine flache Form bei der mittleren Temperatur (Fig. 3a) ein. Zwischen der Stirnfläche des Kolbens 2 und dem Ventilplättchen 6 ist konzentrisch und mit kleinerem Durchmesser ein Abstandselement 7 angeordnet. Die Dicke des Abstandselements 7 definiert in dem Fall ein Spaltmaß, das den Strömungswiderstand bei Strömung durch die Nebenströmungskanäle 5 beeinflusst.

Bei verringerter Temperatur (Fig. 3b) nimmt das Ventilplättchen 6 eine gewölbte Form an, bei der es sich an einem äußeren Rand von der Stirnfläche des Kolbens 2 abhebt. Auf diese Weise wird der Strömungswiderstand bei Strömung durch die Nebenströmungskanäle 5 verringert, um die bei niedriger Temperatur zunehmende Viskosität der Flüssigkeit auszugleichen.

Bei erhöhter Temperatur (Fig. 3c) biegt sich das Ventilplättchen 6 in die entgegengesetzte Richtung, so dass der zwischen dem Ein-/Auslass der Nebenströmungskanäle 5 und dem Ventilplättchen 6 gebildete Spalt verkleinert wird und der Strömungswiderstand bei Strömung durch die Nebenströmungskanäle 5 erhöht wird.

Wie bei dem Ausführungsbeispiel der Fig. 1a - 1c ist auch bei dem der Fig. 2a - 2c und 3a - 3c das Ventilplättchen 6 aus einem Bimetallmaterial gefertigt und ändert seine Form selbstständig temperaturabhängig.

Die bisher dargestellten Ausführungsbeispiele verdeutlichen das Grundprinzip einer anmeldungsgemäßen Bremsvorrichtung mit einer Kompensation der temperaturabhängigen Viskositätsänderungen der zur Abbremsung eingesetzten viskosen Flüssigkeit.

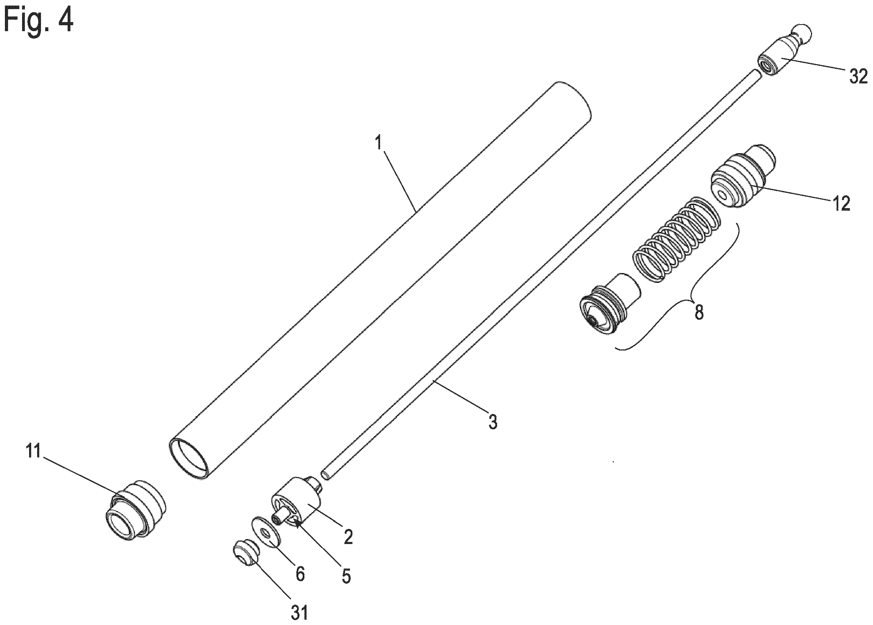

Fig. 4 zeigt in einer isometrischen Explosionsdarstellung ein Ausführungsbeispiel einer Bremsvorrichtung, die auf dem gleichen Funktionsprinzip beruht wie das Beispiel der Fig. 1a - 1c, detaillierter.

Die Bremsvorrichtung umfasst wiederum einen mit viskoser Flüssigkeit gefüllten Zylinder 1, der zu einer Seite durch einen geschlossenen Stopfen 11 und zur anderen Seite durch einen Stopfen 12 mit Bohrung, durch die eine Kolbenstange 3 führt, verschlossen ist.

An ihrem sich im Zylinder 1 befindenen Ende weist die Kolbenstange 3 einen im Inneren des Zylinders 1 verschiebbaren Kolben 2 aus. Ein äußerer Durchmesser des Kolbens 2 ist geringer als ein innerer Durchmesser des Zylinders 1. Bei einer Bewegung des Kolbens 2 muss sich die viskose Flüssigkeit, mit der der Zylinder 1 gefüllt ist, durch den zwischen dem Kolben 2 und dem Zylinder 1 gebildeten Ringspalt bewegen, wodurch die Bewegung des Kolbens 2 abgebremst wird.

Zudem sind im Kolben 2 Nebenströmungskanäle 5 ausgebildet, wobei die Strömungseigenschaften der viskosten Flüssigkeit durch die Nebenströmungskanäle 5 temperaturabhängig durch ein Ventilplättchen 6 beeinflusst wird. Wie im Zusammenhang mit der Fig. 1a-c beschrieben ist, ist das Ventilplättchen 6 beispielsweise aus einer Materialkombination mit Bimetall-Effekt gebildet, so dass es seine Form temperaturabhängig ändert. Das Ventilplättchen 6 ist mittels eines Befestigungsmittels 31 am Ende des Kolbens 2 befestigt.

Am gegenüberliegenden Ende der Kolbenstange 3 ist ein Kugelkopfadapter 32 aufgesetzt, um die Bremsvorrichtung mit einem Möbelteil, gegebenenfalls über einen Bewegungsbeschlag, zu koppeln. Weiter ist in dem Zylinder 1 ein Volumenausgleichselement 8 angeordnet, das eine Feder und einen weiteren Kolben umfasst. Das Volumenausgleichselement 8 dient dazu, einen Volumenunterschied, der sich im Bereich der viskosen Flüssigkeit durch die unterschiedlich weit in die viskose Flüssigkeit eingefahrene Kolbenstange 3 ergibt, auszugleichen.

### Bezugszeichen

- 1, 1': Zylinder
- 11: Stopfen
- 12: durchbohrter Stopfen
- 2: Kolben
- 3: Kolbenstange
- 31: Befestigungsmittel
- 32: Kugelkopfadapter
- 4: Hauptströmungskanal
- 5: Nebenströmungskanal
- 6: Ventilplättchen
- 6': Steuerelement
- 7: Abstandselement
- 8: Volumenausgleichselement

## Patentansprüche

1. Bremsvorrichtung eines Möbels oder Haushaltsgeräts zum Abbremsen eines bewegbaren Teils des Möbels oder Haushaltsgeräts, aufweisend ein mit einer viskosen Flüssigkeit gefülltes Gehäuse und ein darin bewegbares Element, wobei die viskose Flüssigkeit eine Bewegung des bewegbaren Element in mindestens einem Strömungsabschnitt abbremst, wobei das Gehäuse ein Zylinder (1) und das darin bewegbare Element ein Kolben (2) ist, wobei der mindestens eine Strömungsabschnitt mindestens ein Strömungskanal ist, durch den die Flüssigkeit im Zylinder (1) von einem ersten zu einem zweiten Zylinderabschnitt, die durch den Kolben (2) getrennt sind, strömen kann, wobei auf einer Stirnfläche des Kolbens (2) ein Ventilplättchen (6) angeordnet ist, das einen Strömungswiderstand des mindestens einen Strömungskanals temperaturabhängig beeinflusst, wobei der mindestens eine Strömungskanal einen in radialer Erstreckung oder ringförmig ausgebildeten um den Kolben (2) angeordneten Spalt umfasst und das Ventilplättchen (6) aus einer Materialpaarung mit Bimetall-Effekt besteht und seine Form temperaturabhängig ändert, **dadurch gekennzeichnet, dass**
zwischen der Stirnfläche des Kolbens (2) und dem Ventilplättchen (6) konzentrisch ein Abstandselement angeordnet ist, das einen kleineren Durchmesser als das Ventilplättchen (6) aufweist, wobei der zumindest eine Abschnitt des Ventilplättchens (6) mit steigender Temperatur eine Ein- oder Ausgangsöffnung des mindestens einen Strömungskanals zunehmend abdeckt und/oder verschließt.

2. Bremsvorrichtung nach Anspruch 1, bei der der Strömungskanal mindestens einen Kanal umfasst, der zumindest abschnittsweise in Längsrichtung durch den Kolben (2) führt.

3. Möbel oder Haushaltsgerät, **gekennzeichnet durch** mindestens eine Bremsvorrichtung nach Anspruch 1 oder 2 zum Abbremsen einer Bewegung eines bewegbaren Teils des Möbels oder Haushaltsgeräts.

## Claims

1. Braking device of a piece of furniture or domestic appliance for braking a movable part of the piece of furniture or domestic appliance, having a housing filled with a viscous fluid and an element movable therein, wherein the viscous fluid brakes a movement of the movable element in at least one flow section, wherein the housing is a cylinder (1) and the element movable therein is a piston (2), wherein the at least one flow section is at least one flow channel through which the fluid in the cylinder (1) can flow from a first to a second cylinder section separated by the piston (2), wherein a valve plate (6) is arranged on an end face of the piston (2) and influences a flow resistance of the at least one flow channel in a temperature-dependent manner, wherein the at least one flow channel comprises a gap arranged in radial extension or annularly around the piston (2) and wherein the valve plate (6) consists of a material combination with a bimetal effect and changes its shape depending on the temperature, **characterized in that** a spacer element is arranged between the end face of the piston (2) and the valve plate (6), the diameter of the spacer element being smaller than that of the valve plate (6), wherein the at least one section of the small valve plate (6) increasingly covers and/or closes an inlet or outlet opening of the at least one flow channel with increasing temperature.

2. Braking device according to claim 1, wherein the flow channel comprises at least one channel which passes at least in sections in the longitudinal direction through the piston (2).

3. Piece of furniture or household appliance, **characterized by** at least one braking device according to claim 1 or 2 for braking a movement of a movable part of the furniture or household appliance.

## Revendications

1. Dispositif de freinage pour meuble ou appareil ménager, destiné à freiner une partie mobile du meuble ou de l'appareil ménager, présentant un boîtier rempli d'un liquide visqueux et un élément mobile dans celui-ci, le liquide visqueux freinant un mouvement de l'élément mobile dans au moins une partie d'écoulement, dans lequel le boîtier est un cylindre (1) et l'élément mobile dedans est un piston (2), dans lequel l'au moins une section d'écoulement est au moins un canal d'écoulement à travers lequel le liquide contenu dans le cylindre (1) peut s'écouler d'une première partie de cylindre à une deuxième, séparées l'une de l'autre par le piston (2), dans lequel est disposée sur une face d'extrémité du piston (2) une plaquette de soupape (6) qui influe sur la résistance à l'écoulement de l'au moins un canal d'écoulement en fonction de la température, dans lequel l'au moins un canal d'écoulement comprend un interstice disposé dans l'étendue radiale ou en forme d'anneau autour du piston (2) et la plaquette de soupape (6) se compose d'une paire de matériaux ayant un effet bimétallique et change de forme suivant la température, **caractérisé en ce qu'**est disposé de façon concentrique entre la face d'extrémité du piston (2) et la plaquette de soupape (6) un élément d'écartement qui présente un plus petit diamètre que la plaquette de soupape (6), l'au moins une section de la plaquette de soupape (6) couvrant et/ou fermant de plus en plus une ouverture d'entrée ou de sortie de l'au moins un canal d'écoulement avec l'élévation de la température.

2. Dispositif de freinage selon la revendication 1, dans lequel le canal d'écoulement comprend un canal qui passe au moins en partie à travers le piston (2) dans le sens de la longueur.

3. Meuble ou appareil ménager, **caractérisé en ce qu'**il comporte au moins un dispositif de freinage selon la revendication 1 ou 2 pour freiner un mouvement d'une partie mobile du meuble ou de l'appareil ménager.
